# EUROPÄISCHE PATENTSCHRIFT

(11) **EP 1 847 775 B1**
(45) Veröffentlichungstag und Bekanntmachung des Hinweises auf die Patenterteilung: **30.11.2011**
(21) Anmeldenummer: 07005195.8
(22) Anmeldetag: 13.03.2007
(51) Int. Cl.: F23D 3/40, F23N 3/00

(54) **Verfahren zum Betreiben eines brennstoffbetriebenen Fahrzeugheizgerätes**
Method for operating a fuel driven vehicle heating device
Procédé de fonctionnement d'un appareil de chauffage à combustible pour véhicule

(30) Priorität: 20.04.2006 DE 102006018362
(43) Veröffentlichungstag der Anmeldung: 24.10.2007
(73) Patentinhaber: J. Eberspächer GmbH & Co. KG, 73730 Esslingen (DE)
(72) Erfinder: Eberspach, Günter, 72649 Wolfschlugen (DE)
(74) Vertreter: Ruttensperger, Bernhard

(56) Entgegenhaltungen:
- EP-A- 1 500 878
- DE-C1- 4 323 221
- US-A- 5 617 995

## Beschreibung

Die vorliegende Erfindung betrifft ein Verfahren zum Betreiben eines brennstoffbetriebenen Fahrzeugheizgerätes. Dieses Fahrzeugheizgerät ist grundsätzlich so aufgebaut, dass es einen Brennerbereich mit einer Brennkammer und in dieser Brennkammer vorgesehenem porösen Verdampfermedium umfasst. Durch eine Brennstoffzufuhr wird flüssiger Brennstoff in das poröse Verdampfermedium eingespeist. Ferner wird durch eine Verbrennungsluftzufuhr Verbrennungsluft in die Brennkammer eingeleitet.

Bei einem derartigen Fahrzeugheizgerät verdampft im Verbrennungsbetrieb der zunächst flüssig in das poröse Verdampfermediudm eingespeiste Brennstoff an der zur Brennkammer frei liegenden Seiten des porösen Verdampfermediums und vermischt sich in der Brennkammer mit der ebenfalls eingeleiteten Verbrennungsluft. Das so gebildete Gemisch aus Brennstoffdampf und Verbrennungsluft kann gezündet bzw. verbrannt werden und die dabei entstehende Wärme auf ein anderes Medium, beispielsweise Wasser oder die in einem Fahrzeuginnenraum einzuleitende Luft, übertragen werden. Ein derartiges Fahrzeugheizgerät ist aus EP 1 500 878 A bekannt.

Vor allem nach längeren Ruhepausen eines derartigen allgemein bei vergleichsweise niedrigen Umgebungstemperaturen zu betreibendem Fahrzeugheizgerätes, beispielsweise bei der ersten Inbetriebnahme eines derartigen Fahrzeugheizgerätes nach einer Sommerperiode, besteht die Gefahr, dass eine zu dem Brennerbereich führende Brennstoffleitung nicht vollständig mit Brennstoff gefüllt ist, sondern Luftblasen enthält. Auch im normalen Betrieb können unter ungünstigen Umständen, beispielsweise bei nahezu leerem Brennstofftank, Luftblasen in den Bereich einer derartigen Brennstoffleitung gelangen. Die Folge des Einschlusses derartiger Luftblasen ist, dass kurzzeitig, also beispielsweise über einen Zeitraum von 5 bis 10 Sekunden, kein Brennstoff in das poröse Verdampfermedium geleitet wird. Es besteht dabei die Gefahr, dass aufgrund der dann entsprechend auftretenden Abnahme der Brennstoffabdampfung die Verbrennung allmählich zum Erlöschen kommt. In dieser Phase, in welcher die Verbrennung allmählich erlischt, geht die Verbrennung zunehmend in einen Zustand hoher Schadstoffemission, insbesondere hoher Kohlenwasserstofiemission, über. Nach dem Erlöschen der Verbrennung gelangt nicht verbrannter, gleichwohl jedoch noch noch in die Brennkammer abgedampfter Brennstoff in den Abgasstrom.

Es ist die Aufgabe der vorliegenden Erfindung, ein Verfahren zum Betreiben eines brennstoffbetriebenen Fahrzeugheizgerätes bereitzustellen, mit welchem auch bei kurzzeitiger Unterbrechung der Brennstoffzufuhr die Entstehung ungünstiger Emissionen so weit als möglich verhindert wird.

Erfindungsgemäß wird diese Aufgabe gelöst durch ein Verfahren zum Betreiben eines brennstoffbetriebenen Fahrzeugheizgerätes, welches Fahrzeugheizgerät umfasst:
- einen Brennerbereich mit einer Brennkammer und in der Brennkammer porösem Verdampfermedium,
- eine Brennstoffzufuhr zum Einleiten von flüssigem Brennstoff in das poröse Verdampfermedium,
- eine Verbrennungsluftzufuhr zum Einleiten von Verbrennungsluft in die Brennkammer,
wobei das Verfahren die Maßnahmen umfasst:
a) Einspeisen einer Brennstoffzuführmenge und einer Verbrennungsluftzuführmenge für einen vorzusehenden Betrieb des Fahrzeugheizgerätes durch Betreiben der Brennstoffzufuhr und der Verbrennungsluftzufuhr,
b) Überwachen, ob für den vorzusehenden Betrieb des Fahrzeugheizgeräts ausreichend Brennstoff eingeleitet wird,
c) dann, wenn das Überwachungsergebnis der Maßnahme b) darauf hinweist, dass nicht ausreichend Brennstoff eingeleitet wird, Verringern der Verbrennungsluftzuführmenge.

Wird also bei dem erfindungsgemäßen Verfahren erkannt, dass die in das poröse Verdampfermedium eingeleitete und somit im gleichen Maße auch in die Brennkammer abgedampfte Brennstoffzuführmenge nicht derjenigen Brennstoffzuführmenge entspricht, die eigentlich für einen vorzusehenden Betrieb des Fahrzeugheizgeräts erforderlich bzw. vorgegeben ist, so wird zwangsweise auch die Verbrennungsluftzuführmenge zurückgenommen. Damit werden verschiedene besonders vorteilhafte Effekte erzielt. Zum einen wird vermieden, dass durch Verbrennen eines zu mageren Gemisches ein übermäßig hoher Anteil an schädlichen Emissionen, insbesondere an Kohlenwasserstoffen, entsteht. Zum anderen wird durch das Zurücknehmen der Verbrennungsluftzuführmenge und damit das Halten des Verhältnisses der Verbrennungsluft und des Brennstoffdampfes in einem für eine stabile Verbrennung geeigneten Bereich, dafür gesorgt, dass auch bei abnehmender Brennstoffabdampfung die Verbrennung stabil bleibt. Ein möglicherweise drohender Flammabriss durch eine zu starke Abmagerung des Gemisches kann somit verhindert werden mit der Folge, dass möglicherweise die Zeitdauer, über welche die Brennstoffzufuhr unterbrochen ist, überbrückt werden kann und somit ein Flammabriss vollständig vermieden werden kann.

Um bei der erfindungsgemäßen Prozedur in möglichst einfacher Art und Weise darauf schließen zu können, ob eine ausreichende Brennstoffmenge zugeführt wird, wird vorgeschlagen, dass bei der Maßnahme b) die Abgastemperatur eines Abgasstroms überwacht wird und dass bei der Maßnahme c) dann, wenn die Abgastemperatur unter eine erste vorbestimmte Grenze fällt, die Verbrennungsluftzuführmenge verringert wird.

Durch Überwachen der Abgastemperatur der im Brennerbereich bzw. der Brennkammer entstehenden und aus dieser austretenden Verbrennungsabgase wird ein unmittelbarer Rückschluss auf die Qualität der ablaufenden Verbrennung möglich. Wird zu wenig Brennstoff eingespeist, wird entsprechend auch weniger Energie bei der Verbrennung freigesetzt, mit der Folge, dass sofort die Temperatur des Abgasstroms abnimmt. Es wird somit nicht nur eine sehr sondern auch eine nahezu jedwede Verzögerung vermeidende Überwachung ermöglicht.

Die erfindungsgemäße Vorgehensweise nutzt die Tatsache, dass bei einem mit porösem Verdampfermedium ausgestatteten Brennerbereich, also einem so genannten Verdampferbrenner, auch dann, wenn die Brennstoffzufuhr zeitweise unterbrochen ist, dieses poröse Verdampfermedium einen Puffer bildet und der darin enthaltene Brennstoff noch weiter abgedampft wird. Da, beispielsweise bei vollständig unterbrochener Brennstoffzufuhr die in dem porösen Verdampfermedium enthaltene Brennstoffmenge durch die andauernde Verdampfung abnimmt, nimmt selbstverständlich auch in entsprechendem Maße die Abdampfungsrate ab. Um dies im erfindungsgemäßen Sinne berücksichtigen zu können, wird vorgeschlagen, dass bei der Maßnahme c) die Verbrennungsluftzuführmenge kontinuierlich oder schrittweise verringert wird.

Der vorangehend beschriebene Effekt der anhaltenden Brennstoffabdampfung bei unterbrochener Brennstoffzufuhr entspricht demjenigen, der auch dann auftritt, wenn das Fahrzeugheizgerät gewollt abgeschaltet werden soll. Auch in diesem Falle wird die Brennstoffzufuhr unterbrochen und der dann noch im porösen Verdampfermedium enthaltene Brennstoff aufgrund der Tatsache, dass das gesamte System noch relativ hohe Temperaturen aufweisen wird, mit abnehmender Abdampfungsrate abgedampft. Dies wird bei Durchführung von Abschaltprozeduren dadurch berücksichtigt, dass in entsprechender Weise allmählich auch die Verbrennungsluftzufuhr gedrosselt wird, um die Verbrennung zum Vermeiden von übermäßigem Schadstoffausstoß und zur Vermeidung des Ausstoßes von nicht verbranntem Brennstoff möglichst lange aufrecht zu erhalten. Es wird daher gemäß einem weiteren Aspekt der vorliegenden Erfindung vorgeschlagen, dass bei der Maßnahme c) die Verbrennungsluftzuführmenge in einer Weise verringert wird, wie bei Durchführung einer Abschaltprozedur des Fahrzeugheizgerätes. Das heißt, es wird eine an sich für einen anderen Betriebszustand bereits vorgesehene Prozedur auch dann genutzt, wenn aufgrund irgendwelcher ungünstiger Umstände die Brennstoffzufuhr vorübergehend unterbrochen ist.

Gemäß einem weiteren vorteilhaften Aspekt wird vorgeschlagen, dass dem porösen Verdampfermedium eine elektrisch erregbare Heizeinrichtung zugeordnet ist und dass bei der Maßnahme c) dann, wenn der vorzusehende Betrieb des Fahrzeugheizgeräts ein Startbetrieb ist, die dem porösen Verdampfermedium zugeordnete Heizeinrichtung aktiviert wird. Da vor allem in der Startphase des Fahrzeugheizgerätes die verschiedenen Systembereiche desselben noch vergleichsweise niedrige Temperaturen aufweisen und somit die Gefahr besteht, dass der in dem porösen Verdampfermedium enthaltene Brennstoff nicht mit derartiger Rate abdampfen wird, dass auch bei Verringerung der Verbrennungsluftzuführmenge die Verbrennung aufrecht erhalten werden kann, wird gemäß diesem Aspekt in diesem Zustand, also in der Startphase des Heizgerätes, durch Erregen der Heizeinrichtung die Brennstoffabdampfung unterstützt und somit dafür gesorgt, dass eine kurzzeitige Unterbrechung der Verbrennungsluftzufuhr möglicherweise vollständig mit anhaltender Verbrennung überbrückt werden kann.

Weiter kann erfindungsgemäß vorgesehen sein, dass der Brennerbereich des Fahrzeugheizgeräts ein elektrisch erregbares Zündorgan zum Starten der Verbrennung umfasst und dass bei der Maßnahme c) wenigstens dann, wenn der vorzusehende Betrieb des Fahrzeugheizgeräts ein Startbetrieb ist, das Zündorgan aktiviert wird. Auch das Erregen eines elektrischen Zündorgans hat zur Folge, dass vor allem in der Startphase zusätzlich Wärme bereitgestellt wird, die bei noch vergleichsweise kalten Systembereichen die Brennstoffabdampfung unterstützt. Weiterhin wird nicht nur in der Startphase, sondern auch bei bereits länger andauernder Verbrennung durch Erregen des Zündorgans in der Brennkammer ein vergleichsweise warmer bzw. heißer Volumenbereich generiert. In diesem Volumenbereich wird auch bei allmählich schwächer werdender Verbrennung eine Flammstabilisierung erlangt, so dass in Verbindung mit dem Versuch, das Mischverhältnis in einem für eine Verbrennung geeigneten Bereich zu halten, die Zeitdauer, über welche die Verbrennung noch aufrecht erhalten werden kann, weiter verlängert werden kann.

Wie vorangehend bereits dargelegt, kann durch Beobachtung der Temperatur des Abgasstroms unmittelbar auf den Verbrennungsstatus geschlossen werden. Dies kann gemäß einem weiteren erfindungsgemäßen Aspekt vorteilhafterweise dadurch genutzt werden, dass dem porösen Verdampfermedium eine elektrisch erregbare Heizeinrichtung zugeordnet ist und dass dann, wenn die Abgastemperatur unter eine zweite vorbestimmte Grenze fällt, welche unter der ersten vorbestimmten Grenze liegt, die dem porösen Verdampfermedium zugeordnete Heizeinrichtung aktiviert wird. Fällt also die Temperatur des Abgasstroms weiter ab, so ist dieses ein Indiz dafür, dass die Verbrennung bereits beendet ist bzw. kurz vor dem Beenden steht. Wird in dieser Phase dann die dem porösen Verdampfermedium zugeordnete Heizeinrichtung aktiviert, so kann damit der Versuch unternommen werden, den letzten Rest des noch im porösen Verdampfermedium enthaltenen Brennstoffs so schnell als möglich zu verdampfen, um die Verbrennung noch etwas länger aufrecht erhalten zu können. Ferner wird durch diese Maßnahme zusätzlich dafür gesorgt, dass bei bereits beendeter Verbrennung vorbereitend für die zu erwartende wieder einsetzende Brennstoffzufuhr die verschiedenen Systembereiche, insbesondere das poröse Verdampfermedium, wieder ausreichend warm ist bzw. bei einer ausreichend hohen Temperatur gehalten wird, bei welcher möglichst schnell wieder in den Verbrennungszustand übergegangen werden kann. Dies kann weiterhin dadurch unterstützt werden, dass dann, wenn die Abgastemperatur unter eine dritte vorbestimmte Grenze fällt, welche unter der ersten vorbestimmten Grenze liegt, die Verbrennungsluftzuführmenge auf die für den vorzusehenden Betrieb erforderliche Verbrennungsluftzuführmenge angehoben wird. Dabei kann beispielsweise die dritte Grenze der vorangehend angesprochenen zweiten Grenze entsprechen oder ggf. noch unter dieser liegen. Das Unterschreiten dieser dritten Grenze ist ein Indiz dafür, dass die Verbrennung bereits zum Erliegen gekommen ist, so dass ebenfalls vorbereitend für den wieder aufzunehmenden Verbrennungsbetrieb bzw. das zu erwartende Wiedereinsetzen der Brennstoffzufuhr wieder eine Verbrennungsluftmenge eingeleitet werden kann, die in Zuordnung zu der zu erwartenden Brennstoffzuführmenge für den vorgegebenen Betrieb des Fahrzeugheizgeräts geeignet ist.

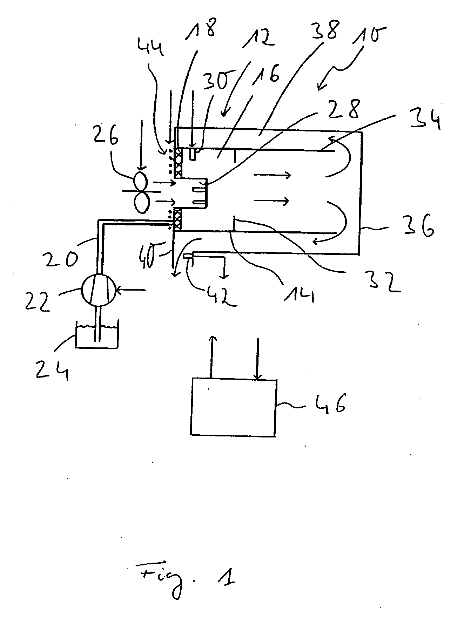

Die vorliegende Erfindung wird nachfolgend mit Bezug auf die beiliegende Fig. 1 beschrieben, welche in prinzipieller Darstellung den Aufbau eines in erfindungsgemäßer Art und Weise betreibbaren Fahrzeugheizgerätes veranschaulicht.

In Fig. 1 ist ein brennstoffbetriebenes Fahrzeugheizgerät allgemein mit 10 bezeichnet. Dieses Fahrzeugheizgerät 10 umfasst einen Brennerbereich 12 mit einer in einem Brennkammergehäuse 14 gebildeten Brennkammer 16. An einem Boden des Brennkammergehäuses 14 ist an der der Brennkammer 16 zugewandten Seite poröses Verdampfermedium 18 vorgesehen, welches beispielsweise aus Geflecht, Gewirk, Schaumkeramik oder dergleichen aufgebaut sein kann. Über eine Brennstoffzuführleitung 20 speist eine Brennstoffpumpe 22 flüssigen Brennstoff aus einem Brennstoffreservoir 24 in das poröse Verdampfermedium 18. An seiner zur Brennkammer 16 hin frei liegenden Seite gibt das poröse Verdampfermedium 18, in dessen Innenvolumenbereich der flüsssige Brennstoff sich durch Kapillarförderwirkung verteilt, Brennstoffdampf zur Brennkammer 16 hin ab.

Ein Verbrennungsluftgebläse 26 speist die für die Verbrennung erforderliche Luft und somit auch den erforderlichen Brennstoff über einen beispielsweise am Boden der Brennkammer 14 vorgesehenen Lufteinleitansatz 28 in die Brennkammer 16 ein. Es kann somit in der Brennkammer 16 ein Gemisch aus Verbrennungsluft und Brennstoffdampf gebildet werden, das durch ein elektrisch betreibbares Zündorgan 30, beispielsweise einen Glühstift, gezündet werden kann. Bei ablaufender Verbrennung treten die Verbrennungsabgase aus der Brennkammer 16 durch eine Flammblende 32 hindurch in ein Flammrohr 34 ein. Ein Wärmetauschergehäuse 36 umgibt das Flammrohr 34 und bildet mit diesem einen Abgasströmungsraum 38. Über einen Abgasauslass 40 tritt der Abgasstrom, der bereits einen Teil der darin transportierten Wärme auf das Gehäuse 36 umströmendes zu erwärmendes Medium übertragen hat, aus dem Strömungsraum 38 und beispielsweise in die Umgebung, ggf. in ein Abgasreinigungssystem, aus. Die Temperatur der Verbrennungsabgase kann beispielsweise am oder nahe dem Auslass 40 durch einen Temperatursensor 42 erfasst werden. Ferner ist dem porösen Verdampfermedium 18 zugeordnet eine elektrisch erregbare Heizeinrichtung 44 vorgesehen. Insbesondere in einer Startphase kann diese erregt werden und somit das poröse Verdampfermedium 18 und den darin enthaltenen flüssigen Brennstoff erwärmen, um eine verstärkte Brennstoffabdampfung in Richtung Brennkammer zu erlangen.

Das Fahrzeugheizgerät 10 umfasst ferner ein Steuergerät 46. Dieses steuert bzw. regelt den Betrieb der verschiedenen Systembereiche des Fahrzeugheizgeräts 10. So stehen das Verbrennungsluftgebläse 26 und die Brennstoffpumpe 22 unter der Ansteuerung dieses Steuergeräts 46, um für einen vorzusehenden Verbrennungsbetrieb des Fahrzeugheizgeräts 10 die geeignete Brennstoffzuführmenge und die geeignete Verbrennungsluftzuführmenge in die Brennkammer 16 einleiten zu können. Ferner stehen auch das Zündorgan 30 und die elektrisch erregbare Heizeinrichtung 44 für das poröse Verdampfermedium 18 unter der Ansteuerung der Ansteuervorrichtung 46, um insbesondere im Startbetrieb durch Erregen des Zündorgans 30 und ggf. auch Erregen der Heizeinrichtung 44 ausreichend hohe Temperaturen bereitzustellen, die ein zuverlässiges Zünden des in der Brennkammer 16 bereitgestellten Gemisches gewährleisten. Den Betrieb des Fahrzeugheizgeräts 10 steuert das Steuergerät 46 unter Berücksichtigung verschiedener Parameter. Beispielsweise kann die Umgebungstemperatur berücksichtigt werden oder die in einem Fahrzeuginnenraum vorherrschende Temperatur, um unter Berücksichtigung der erforderlichen Wärmemenge die Leistungsstufe des Fahrzeugheizgeräts 10 entsprechend einzustellen. Hierfür wird das Steuergerät 46 von verschiedenen Sensoren oder bestimmte Ablaufprogramme ggf. speichernden Systembereichen mit entsprechenden Signalen gespeist. Auch der Temperatursensor 42 gibt ein Erfassungssignal an das Steuergerät 46 ab, so dass, wie im Folgenden dargelegt, auch dieses Signal bzw. die damit korrespondierende Temperatur der Abgase am Auslass 40 beim Betrieb berücksichtigt werden können.

Unter ungünstigen Bedingungen kann es vorkommen, dass bei korrekt arbeitender Brennstoffpumpe 22 der kontinuierliche Brennstoffstrom durch die Leitung 20 hindurch unterbrochen ist, beispielsweise können Lufteinschlüsse entstehen, vor allem dann, wenn das Fahrzeugheizgerät längere Zeit nicht in Betrieb war oder in einem Reservoir nur noch eine vergleichsweise geringe Menge an flüssigem Brennstoff vorhanden ist. Derartige Lufteinschlüsse führen dazu, dass für eine begrenzte Zeitdauer die Einleitung von Brennstoff in das poröse Verdampfermedium 18 unterbrochen ist. Bei bereits ablaufender Verbrennung hat dies zur Folge, dass für diese begrenzte Zeitdauer, die sich beispielsweise über 5 bis 10 Sekunden erstrecken kann, aufgrund der unterbrochenen Brennstoffeinleitung nur noch Brennstoff in Richtung Brennkammer 16 abgegeben wird, der vor Unterbrechung der Brennstoffzufuhr bereits im porösen Verdampfermedium 18 enthalten war. Die Abdampfrate, mit welcher dieser Restbrennstoff in Richtung Brennkammer 16 abgegeben wird, hängt selbstverständlich primär von der Temperatur im Bereich des porösen Verdampfermediums 18 ab. Nach bereits längere Zeit ablaufender Verbrennung ist diese Temperatur vergleichsweise hoch und stellt somit sicher, dass eine für eine Aufrechterhaltung der Verbrennung erforderliche Brennstoffmenge abgegeben werden kann, wenngleich mit abnehmender Rate. Diese verringerte bzw. abnehmende Brennstoffabdampfung bei unterbrochener Brennstoffzufuhr hat bei unveränderter Einleitung der Verbrennungsluft zur Folge, dass das in der Brennkammer 16 bereitgestellte Gemisch zunehmend abgemagert wird. Vor allem dann, wenn der für das Fahrzeugheizgerät 10 vorzusehende Betrieb ein Betrieb mit hoher Heizleistung war, also eine vergleichsweise große Brennstoffzuführmenge und eine entsprechend große Verbrennungsluftzuführmenge einzuspeisen sind, hat dies zur Folge, dass sehr schnell das Verhältnis in einen Bereich gelangen würde, in welchem die Verbrennung nicht mehr aufrecht erhalten werden kann und somit die Flamme erlischt.

Um dies zu vermeiden, wird bei einem erfindungsgemäßen Betrieb eines derartigen Fahrzeugheizgeräts 10 das Ausgangssignal des Temperatursensors 42 überwacht. Dieses Ausgangssignal bzw. die dadurch detektierte Temperatur steht in engem Zusammenhang mit der Qualität der in der Brennkammer 16 ablaufenden Verbrennung. Eine auch nur geringe Abnahme der eingespeisten bzw. verbrannten Brennstoffmenge hat sofort zur Folge, dass bei der in der Brennkammer 16 ablaufenden Verbrennung eine geringere Wärmemenge bereitgestellt wird, der Abgasstrom also eine geringere Temperatur aufweisen wird. Durch Überwachung des Signals des Temperatursensors 42 kann also unmittelbar darauf rückgeschlossen werden, ob die für einen bestimmten vorzunehmenden Verbrennungsbetrieb des Fahrzeugheizgeräts 10 vorgesehene Brennstoffzuführmenge tatsächlich auch eingespeist wird. Ist dies beispielsweise durch den Einschluss einer Luftblase nicht der Fall, so wird der entsprechende Temperaturabfall durch das Signal des Teperatursensors 42 indiziert und für das Steuergerät 46 erkennbar.

Tritt ein derartiger Temperaturabfall auf, so wird erfindungsgemäß auch Verbrennungsluftzuführmenge angepasst. Das heißt, das Steuergerät 46 steuert das Gebläse 26 zum Verringern der in die Brennkammer 16 eingespeisten Verbrennungsluftmenge an. Dies erfolgt vorzugsweise so, dass das dann noch bereitgestellte Verhältnis von Verbrennungsluft zu Brennstoffdampf in einem Bereich liegt, in welchem die Verbrennung stabil aufrecht erhalten werden kann und die Entstehung eines übermäßigen Schadstoffanteils vermieden werden kann. Dabei ist im Allgemeinen davon auszugehen, dass bei spontan unterbrochener Brennstoffzufuhr die dann noch andauernde Abdampfung von Restbrennstoff aus dem porösen Verdampfermedium 18 bei bekannter Temperatur mit einer auch im Zusammenhang mit den geometrischen Bedingungen und der Größe insbesondere des porösen Verdampfermediums 18 im Zusammenhang stehenden allmählich, beispielsweise exponentiell, abnehmenden Rate erfolgt. In Anpassung an diese beispielsweise in Laborversuchen auch zu ermittelnde Rate kann auch die Verringerung der Verbrennungsluftzuführmenge erfolgen, so dass das Verhältnis von Verbrennungsluft zu Brennstoffdampf auch bei vorübergehender Unterbrechung der Brennstoffzufuhr nahezu konstant gehalten werden kann.

Mit dieser Vorgehensweise werden verschiedene vorteilhafte Effekte erzielt. Zum einen wird vermieden, dass durch spontane übermäßige Abmagerung des Gemisches die Verbrennung zum Erliegen kommt und dann durch die weiter anhaltende Brennstoffabdampfung nicht verbrannter Brennstoff ausgestoßen wird. Zum anderen wird durch das näherungsweise Konstanthalten des Gemischverhältnisses die Zusammensetzung der Abgase so sein, wie auch im normal ablaufenden Verbrennungsbetrieb. Ein weiterer besonders vorteilhafter Effekt ist, dass durch das Halten des Gemischverhältnisses in einem Bereich, welcher eine stabile Verbrennung gewährleistet, das Erlöschen der Flamme so lange als möglich hinausgezögert werden kann, so dass möglicherweise auch die durch Einschluss einer Luftblase erzeugte Unterbrechung in der Brennstoffzufuhr auf diese Art und Weise vollständig überbrückt werden kann. Dabei kann beispielsweise zur Stabilisierung der Verbrennung zusätzlich in dieser Phase, in welcher bedingt durch die Abnahme oder Unterbrechung der Brennstoffzufuhr auch die Verbrennungsluftzuführmenge reduziert wird, das Zündorgan 30 erregt werden, um somit lokal einen Bereich sehr hoher Temperatur zu schaffen. Ein derartiger Bereich trägt zur Stabilisierung der Flamme bei und kann das Erlöschen der Flamme noch weiter hinauszögern.

Tritt eine derartige Unterbrechung der Brennstoffzufuhr beispielsweise in der Startphase auf, also einer Phase, in welcher das Fahrzeugheizgerät 10 in Betrieb zu setzen ist, so kann ein Zustand auftreten, in welchem die Temperatur des porösen Verdampfermediums 18 noch nicht hoch genug ist, um eine ausreichende Brennstoffabdampfung sicherzustellen. Dabei ist zu berücksichtigen, dass im Allgemeinen in einer derartigen Startphase die Heizeinrichtung 44 erregt wird, ebenso wie das Zündorgan 30, so dass durch das zusätzliche Erwärmen des porösen Verdampfermediums 18 die Brennstoffabdampfrate erhöht werden kann bzw. das gesamte System vor allem in dem dem porösen Verdampfermedium 18 nahen Bereich auf ausreichend hohe Temperatur gebracht werden kann. Das Erregen der Heizeinrichtung 44 kann aber auch in der Startphase beispielsweise dann unterbleiben, wenn diese Startphase kein Kaltstart ist, sondern zuvor das Fahrzeugheizgerät 10 bereits in Betrieb war und nur kurzzeitig stillgesetzt war. Im normalen Betrieb, also bei nicht unterbrochener Brennstoffzufuhr, kann die im porösen Verdampfermedium 18 noch vorhandene Temperatur ausreichend hoch sein, um den eingespeisten Brennstoff mit ausreichender Verdampfungsrate in Richtung Brennkammer 16 weiter zu geben. Bei unterbrochener Brennstoffzufuhr kann dann jedoch die Temperatur des porösen Verdampfermediums möglicherweise nicht ausreichen, um den darin bereits enthaltenen Brennstoff ausreichend abzudampfen und somit eine anhaltende Verbrennung in der Startphase sicherzustellen. Erfindungsgemäß kann dann jedoch die Heizeinrichtung 44 erregt werden, so dass die Brennstoffabdampfung unterstützt werden kann und somit auch bei unterbrochener Brennstoffzufuhr in dieser Startphase das Erlöschen der Flamme verhindert bzw. so lang als möglich hinausgezögert werden kann.

Unabhängig davon, ob der für das Fahrzeugheizgerät vorzusehende Betrieb ein Startbetrieb oder ein normaler Verbrennungsbetrieb ist, kann dann, wenn anhand des Signals des Temperatursensors 42 bereits entschieden worden ist, dass die Verbrennungsluftzuführmenge verringert werden muss und entsprechend das Gebläse 26 auch angesteuert werden muss, dieses Signal weiterhin ausgewertet werden. Durch die vorangehend beschriebene allmähliche Abnahme der Brennstoffabdampfungsrate und entsprechend auch die Abnahme der bei der Verbrennung dann noch zur Verfügung gestellten Energie wird auch das Signal des Temperatursensors 42 eine entsprechende Temperaturabnahme des Abgasstroms indizieren, und zwar noch unter denjenigen Grenzwert, der als Auslösekriterium für das Verringern der Verbrennungsluftzuführmenge gegeben ist. Eine weitere deutliche Abnahme der Temperatur des Abgasstroms, beispielsweise unter eine zweite noch niedriger liegende Grenze zeigt an, dass die Verbrennung kurz vor dem Erlöschen ist. In diesem Zustand kann dann bei bereits normalem Verbrennungsbetrieb, also nach der Startphase, auch die Heizeinrichtung 44 erregt werden. Dies ist, bevor eine bestimmte zweite Grenze unterschritten wird, an sich nicht vorteilhaft, da dies eine beschleunigte Brennstoffabdampfung in einem über das erforderliche Mindestausmaß hinaus gehenden Ausmaß der Abdampfung zur Folge hätte und somit die Zeitdauer, die mit dem abdampfenden Restbrennstoff überbrückt werden kann, verringern würde. Zeigt jedoch das Signal des Temperatursensors 42 an, dass tatsächlich das Erlöschen der Flamme unmittelbar bevorsteht, kann durch Erregen der Heizeinrichtung 44 noch ein letzter Versuch unternommen werden, den noch vorhandenen Restbrennstoff beschleunigt auszutreiben, um somit das Absinken des in der Brennkrammer 16 vorhandenen Brennstoffdampfes unter ein für eine Verbrennung erforderliches Mindestniveau noch weiter hinaus zu zögern. Ferner kann das Erregen der Heizeinrichtung 44 in dieser Phase dazu genutzt werden, dass dann, wenn tatsächlich nicht mehr ausreichend Brennstoff zum Aufrechterhalten der Verbrennung abgedampft werden kann, vor allem das Verdampfermedium 18 bereits vorgeheizt wird bzw. dessen Temperatur nicht weiter absinken wird und somit bei dann wieder einsetzender Brennstoffzufuhr die Verbrennung so schnell als möglich gestartet werden kann. Auch das Zündorgan 30 kann in dieser Phase bereits wieder in Betrieb gesetzt sein, um das System bereits für die Wiederaufnahme der Verbrennung vorzubereiten.

Indiziert das Signal des Temperatursensors 42 den vorangehend beschriebenen weiteren Temperaturabfall des Abgasstroms, beispielsweise unter einen weiteren Grenzwert, der noch tiefer liegen kann, was also ein sicheres Indiz dafür ist, dass keine Verbrennung mehr in der Brennkammer 16 abläuft, so kann gemäß einem weiteren Aspekt der vorliegenden Erfindung neben dem in dieser Phase gestarteten Betrieb der Heizeinrichtung 44 oder/und des Zündorgans 30 auch das Gebläse 26 wieder angesteuert werden, um die Verbrennungsluftzuführmenge wieder anzuheben. Auch dies ist eine Vorbereitungsmaßnahme, um für den Fall des Wiedereinsetzens der Brennstoffzufuhr mit der für den eigentlich vorzunehmenden Verbrennungsbetrieb geeigneten Menge auch die für diesen Betrieb erforderliche Verbrennungsluftzuführmenge bereitzustellen. In diesem Falle kann also ab dem Wiedereinsetzen der Brennstoffeinspeisung sichergestellt werden, dass das sich dann bildende Gemisch ein Verhältnis hat, wie es für den eigentlich vorzusehenden Betrieb geeignet ist und somit für eine stabile Verbrennung genutzt werden kann.

Selbstverständlich ist es möglich, diese vorbereitenden Maßnahmen, also das Erhöhen der Verbrennungsluftzuführmenge, das Erregen der Heizeinrichtung 44 bzw. das Erregen des Zündorgans 30 nicht oder nicht nur unter Berücksichtigung des Signals des Temperatursensors 42, sondern auch durch Vorgabe eines bestimmten Zeitablaufs auszulösen. So kann beispielsweise eine vorbestimmte Zeitdauer nach dem Erkennen des Unterbrechens der Brennstoffzufuhr davon ausgegangen werden, dass die Flamme tatsächlich erloschen ist und somit mit den Maßnahmen begonnen werden soll, die eine möglichst schnelle Wiederaufnahme des Verbrennungsbetriebs gewährleisten.

Weiter kann vorgesehen sein, dass dann, wenn eine vorbestimmte Zeitdauer nach dem Auftreten der Unterbrechung der Brennstoffzufuhr bzw. nach dem Erlöschen der Flamme nicht wieder festgestellt wird, dass durch Erhöhung der Temperatur des Abgasstroms die Verbrennung wieder gestartet wurde, darauf geschlossen werden, dass ein Fehler im System vorliegt. Es kann dann das Fahrzeugheizgerät 10 abgeschaltet und in einen Störmodus gebracht werden, bei dem auch eine entsprechende Fehlermeldung ausgegeben wird, um den Betreiber eines mit einem derartigen Gerät ausgestatteten Fahrzeugs über diesen Fehler zu informieren.

Es ist selbstverständlich, dass die Überwachung der Brennstoffzufuhr auch in anderer Weise erfolgen kann. So kann beispielsweise auch unmittelbar im Bereich der Leitung 20 durch einen entsprechenden Strömungssensor erkannt werden, ob Brennstoff durch diese Leitung strömt. Auch kann die Termperaturerfassung in anderer Weise bzw. an anderer Stelle erfolgen. So können beispielsweise ein an der Außenseite des Gehäuses 26 vorgesehener und dieses Gehäuse möglicherweise kontaktierender Temperatursensor die Temperatur des Abgasstroms mittelbar erfassen, mit dem Vorteil, dass dieser Sensor der sehr hohen Temperatur und der potentiell kritischen Umgebung der Abgase nicht ausgesetzt wäre, gleichwohl eine Änderung der Temperatur im Abgasstrom mit etwas höherer Verzögerung erfassen würde.

## Patentansprüche

1. Verfahren zum Betreiben eines brennstoffbetriebenen Fahrzeugheizgerätes, welches Fahrzeugheizgerät umfasst:
- einen Brennerbereich (12) mit einer Brennkammer (16) und in der Brennkammer (16) porösem Verdampfermedium (18),
- eine Brennstoffzufuhr (22, 20) zum Einleiten von flüssigem Brennstoff in das poröse Verdampfermedium (18),
- eine Verbrennungsluftzufuhr (26, 28) zum Einleiten von Verbrennungsluft in die Brennkammer (16),
wobei das Verfahren die Maßnahmen umfasst:
a) Einspeisen einer Brennstoffzuführmenge und einer Verbrennungsluftzuführmenge für einen vorzusehenden Betrieb des Fahrzeugheizgerätes (10) durch Betreiben der Brennstoffzufuhr (22, 20) und der Verbrennungsluftzufuhr (26, 28),
b) Überwachen, ob für den vorzusehenden Betrieb des Fahrzeugheizgeräts (10) ausreichend Brennstoff eingeleitet wird,
c) dann, wenn das Überwachungsergebnis der Maßnahme b) darauf hinweist, dass nicht ausreichend Brennstoff eingeleitet wird, Verringern der Verbrennungsluftzuführmenge.

2. Verfahren nach Anspruch 1,
**dadurch gekennzeichnet, dass** bei der Maßnahme b) die Abgastemperatur eines Abgasstroms überwacht wird und dass bei der Maßnahme c) dann, wenn die Abgastemperatur unter eine erste vorbestimmte Grenze fällt, die Verbrennungsluftzuführmenge verringert wird.

3. Verfahren nach Anspruch 1 oder 2,
**dadurch gekennzeichnet, dass** bei der Maßnahme c) die Verbrennungsluftzuführmenge kontinuierlich oder schrittweise verringert wird.

4. Verfahren nach einem der Ansprüche 1 bis 3,
**dadurch gekennzeichnet, dass** bei der Maßnahme c) die Verbrennungsluftzuführmenge in einer Weise verringert wird, wie bei Durchführung einer Abschaltprozedur des Fahrzeugheizgerätes (10).

5. Verfahren nach einem der Ansprüche 1 bis 4,
**dadurch gekennzeichnet, dass** dem porösen Verdampfermedium (18) eine elektrisch erregbare Heizeinrichtung (44) zugeordnet ist und dass bei der Maßnahme c) dann, wenn der vorzusehende Betrieb des Fahrzeugheizgeräts (10) ein Startbetrieb ist, die dem porösen Verdampfermedium (18) zugeordnete Heizeinrichtung (44) aktiviert wird.

6. Verfahren nach einem der Ansprüche 1 bis 5,
**dadurch gekennzeichnet, dass** der Brennerbereich (12) des Fahrzeugheizgeräts (10) ein elektrisch erregbares Zündorgan (30) zum Starten der Verbrennung umfasst und dass bei der Maßnahme c) wenigstens dann, wenn der vorzusehende Betrieb des Fahrzeugheizgeräts (10) ein Startbetrieb ist, das Zündorgan (30) aktiviert wird.

7. Verfahren nach Anspruch 2 und einem der Ansprüche 3 bis 6, sofern auf Anspruch 2 rückbezogen,
**dadurch gekennzeichnet, dass** dem porösen Verdampfermedium (18) eine elektrisch erregbare Heizeinrichtung (44) zugeordnet ist und dass dann, wenn die Abgastemperatur unter eine zweite vorbestimmte Grenze fällt, welche unter der ersten vorbestimmten Grenze liegt, die dem porösen Verdampfermedium (18) zugeordnete Heizeinrichtung (44) aktiviert wird.

8. Verfahren nach Anspruch 2 oder einem der Ansprüche 3 bis 7, sofern auf Anspruch 2 rückbezogen,
**dadurch gekennzeichnet, dass** dann, wenn die Abgastemperatur unter eine dritte vorbestimmte Grenze fällt, welche unter der ersten vorbestimmten Grenze liegt, die Verbrennungsluftzuführmenge auf die für den vorzusehenden Betrieb erforderliche Verbrennungsluftzuführmenge angehoben wird.

## Claims

1. A method for operating a fuel operated vehicle heating device, the vehicle heating device comprising:
- a burner section (12) with a combustion chamber (16) and a porous evaporator medium (18) inside said burning chamber,
- a fuel feed (22, 20) for inserting liquid fuel into said porous evaporator medium (18),
- a combustion air supply (26, 28) for inserting combustion air into said combustion chamber (16),
said method comprising the following actions:
a) inserting a fuel feed volume and a combustion air supply volume for an operation to be provided of said vehicle heating device (10) by applying said fuel feed (22, 20) and said combustion air supply (26, 28),
b) monitoring if sufficient fuel is inserted for the operation of said vehicle heating device (10) to be provided,
c) if the monitoring result of action b) indicates that the amount of fuel feed is not sufficient, reducing said combustion air supply.

2. The method according to claim 1,
**characterized in that** with action b) the exhaust gas temperature of an exhaust gas flow is monitored and **in that** with action c) said combustion air supply volume is reduced if the exhaust gas temperature falls below a first predetermined limit.

3. The method according to claim 1 or 2,
**characterized in that** with action c) said combustion air supply volume is reduced continuously or step by step.

4. The method according to one of claims 1 to 3,
**characterized in that** with action c) said combustion air supply volume is reduced in the same way as when carrying out a switch-off procedure for said vehicle heating device (10).

5. The method according to one of claims 1 to 4,
**characterized in that** an electrically excitable heating device (44) is associated to said porous evaporator medium (18) and **in that** with action c) said heating device (44) associated to said porous evaporator medium (18) is activated if the operation of said vehicle heating device (10) to be provided is a starting operation.

6. The method according to one of claims 1 to 5,
**characterized in that** said burner section (12) of said vehicle heating device (10) comprises an electrically excitable ignition member (30) for starting combustion and that with action c) said ignition element (30) is activated, at least if he operation of said vehicle heating device (10) to be provided is a starting operation.

7. The method according to claim 2 and one of claims 3 to 6, if depending on claim 2,
**characterized in that** an electrically excitable heating device (44) is associated to said porous evaporator medium (18) and **in that** said heating device (44) associated to said porous evaporator medium (18) is activated if said exhaust gas temperature falls below a second predetermined limit which is below said first predetermined limit.

8. The method according to claim 2 and one of claims 3 to 7, if depending on claim 2,
**characterized in that** said combustion air supply volume is increased to the combustion air supply volume required for the operation to be provided if said exhaust gas temperature falls below a third predetermined limit which is below said first predetermined limit.

## Revendications

1. Une méthode pour opérer un dispositif ce chauffage de véhicule utilisant un combustible, le dispositif de chauffage de véhicule comportant :
- une section de brûleur (12) avec une chambre de combustion (16) et un médium d'évaporation poreux (18) dans la chambre de combustion (16),
- une alimentation en carburant (22, 20) pour introduire du carburant liquide dans le médium d'évaporation poreux (18),
- une alimentation en air de combustion (26, 28) pour introduire de l'air de combustion dans la chambre de combustion (16),
la méthode comprenant les mesures suivantes :
a) introduire une quantité d'alimentation en carburant et une quantité d'alimentation en air de combustion pour une opération à prévoir du dispositif de chauffage de véhicule (10) en appliquant l'alimentation en carburant (22, 20) et l'alimentation en air de combustion (26, 28),
b) vérifier si une quantité suffisante de carburant pour l'opération à prévoir du dispositif de chauffage de véhicule (10) est introduite,
si le résultat de la vérification dans le cadre de la mesure b) indique que la quantité de carburant introduite n'est pas suffisante, réduire le volume de l'alimentation en air de combustion.

2. La méthode selon la revendication 1,
**caractérisée en ce que** dans le cadre de la mesure b) la température des gaz d'échappement d'un flux de gaz d'échappement est surveillée et **en ce que** dans le cadre de la mesure c) le volume de l'alimentation en air de combustion est réduit si la température des gaz d'échappement descend en dessous d'une première limite prédéterminée.

3. La méthode selon la revendication 1 ou 2,
**caractérisée en ce que** dans le cadre de la mesure c) le volume de l'alimentation en air de combustion est réduit en continu ou graduellement.

4. La méthode selon une des revendications 1 à 3,
**caractérisée en ce que** dans le cadre de la mesure c) le volume de l'alimentation en air de combustion est réduit de la même manière que lors de la procédure de mise hors marche du dispositif de chauffage de véhicule (10).

5. La méthode selon une des revendications 1 à 4,
**caractérisée en ce qu'**un dispositif de chauffage (44) pouvant être excité électriquement est associé au médium d'évaporation poreux (18) et **en ce que** dans le cadre de la mesure c) le dispositif de chauffage (44) associé au médium d'évaporation poreux (18) est activé lorsque l'opération à prévoir du dispositif de chauffage de véhicule (10) est une opération de départ.

6. La méthode selon une des revendications 1 à 5,
**caractérisée en ce que** la section de brûleur (12) du dispositif de chauffage de véhicule (10) comprend un élément incandescent (30) pouvant être excité électriquement pour démarrer la combustion et **en ce que** dans le cadre de la mesure c) l'élément incandescent (30) est activé, au moins lorsque l'opération à prévoir du dispositif de chauffage de véhicule (10) est une opération de départ.

7. La méthode selon la revendication 2 et une des revendications 3 à 6, si elles dépendent de la revendication 2,
**caractérisée en ce que** qu'un dispositif de chauffage (44) pouvant être excité électriquement est associé au médium d'évaporation poreux (18) et **en ce que** le dispositif de chauffage (44) associé au médium d'évaporation poreux (18) est activé lorsque la température des gaz d'échappement descend en dessous d'une deuxième limite prédéterminée inférieure à la première limite prédéterminée.

8. La méthode selon la revendication 2 et une des revendications 3 à 7, si elles dépendent de la revendication 2,
**caractérisée en ce que** le volume de l'alimentation en air de combustion est augmenté au volume d'alimentation en air de combustion nécessaire pour l'opération à prévoir lorsque la température des gaz d'échappement descend en dessous d'une troisième limite prédéterminée inférieure à la première limite prédéterminée.
